# EUROPEAN PATENT SPECIFICATION

(11) **EP 3 380 232 B1**
(45) Date of publication and mention of the grant of the patent: **01.06.2022**
(21) Application number: 16797570.5
(22) Date of filing: 17.11.2016
(51) Int. Cl.: B01J 37/08, B01J 37/34, B01J 21/06, B01J 23/22, B01J 23/30, B01D 53/86, B01D 53/94, B01J 35/04, B01J 37/02, F01N 3/20

(54) **METHOD OF PREPARATION OF A MONOLITHIC CATALYST FOR SELECTIVE CATALYTIC REDUCTION OF NITROGEN OXIDES**
VERFAHREN ZUR HERSTELLUNG EINES MONOLITHISCHEN KATALYSATORS ZUR SELEKTIVEN KATALYTISCHEN REDUKTION VON STICKOXIDEN
PROCÉDÉ DE PRÉPARATION D'UN CATALYSEUR MONOLITHIQUE POUR RÉDUCTION CATALYTIQUE SÉLECTIVE D'OXYDES D'AZOTE

(30) Priority: 27.11.2015 DK 201500759
(43) Date of publication of application: 03.10.2018
(73) Proprietor: UMICORE AG & CO. KG, 63457 Hanau-Wolfgang (DE)
(72) Inventor: HØJ, Jakob Weiland, 2820 Gentofte (DK); VISTISEN, Peter Østergaard, 2800 Kgs. Lyngby (DK)
(86) International application number: PCT/EP2016/077988
(87) International publication number: WO 2017/089220

(56) References cited:
- US-A- 4 916 107
- US-A1- 2015 037 222
- QIU KUNZAN ET AL: "A novel method of microwave heating mixed liquid-assisted regeneration of V2O5-WO3/TiO2commercial SCR catalysts", ENVIRONMENTAL GEOCHEMISTRY AND HEALTH, KEW, GB, vol. 37, no. 5, 3 March 2015 (2015-03-03), pages 905-914, XP035549352, ISSN: 0269-4042, DOI: 10.1007/S10653-014-9663-Y [retrieved on 2015-03-03]

## Description

The invention relates to monolithic structured catalysts for the removal of nitrogen oxides (NOx) from exhaust gases or flue gasses from stationary and automobile sources.

Methods for removing nitrogen oxides from stationary or automobile sources by means of the selective catalytic reduction (SCR) process are well-known in the art.

In the SCR process, the content of NOx in the flue or exhaust gas can be removed or substantially reduced by conversion of NOx to free nitrogen with a reducing agent typically ammonia in the presence of a catalyst by the following reactions:

4NO+4NH3+O2=4N2+6H2O

NO+NO2+2NH3=2N2+3H2O

The catalytically active components of vanadium based SCR catalysts compositions consist of vanadium pentoxide and tungsten trioxide supported on titania. For use in gas cleaning the catalyst is impregnated into a washcoat supported on a monolithic substrate. The catalyst body typically consists of an extruded ceramic monolith or is made of stacked up or rolled up corrugated sheets of ceramic material or non-woven fibers forming a honeycomb monolith with a plurality of parallel gas flow channels.

Washcoating of a monolithic or honeycomb monolithic substrate is usually performed by slurry pickup in the substrate by pouring the slurry into the channels of the monolithic substrate, or by dipping the substrate at one side into the washcoat slurry and optionally applying vacuum at the opposite side.

After having been coated on the substrate, the washcoat is dried and calcined prior to impregnation of the washcoat with an aqueous impregnation solution containing soluble precursors of the catalytically active metal oxides. Impregnation procedures comprise immersing the washcoated substrate in a dip tank containing the aqueous impregnation solution or spraying the washcoated substrate with a solution of the impregnation solution.

The impregnated washcoated substrate must then be dried to remove excess of water from the washcoat prior to activation. US4916107A represents one example of the above described conventional production of a SCR catalyst.

A problem with drying is that it affects concentration gradients of the catalytic components, both across the thickness of the washcoat layer and along the axis of channels in the monolith. As such, it has a potential impact on the quality of the finished catalyst.

Concentration gradients are in particular disadvantageous in vanadium based SCR catalysts. The catalytic activity in the SCR reaction is dependent on vanadium concentration on the catalytic active surface of the coated substrate. That is, high vanadium concentrations cause high NOx conversion at low temperatures while low conversion at high temperatures. Low vanadium concentrations have the opposite effect.

To gain maximum NOx conversion there must be an even distribution of the desired vanadium concentration for a specific temperature SCR application over the whole surface of the coated substrate.

Both gravity and capillary forces cause the vanadium compound to move over the titania surface in the washcoat during drying and cause vanadium concentration gradients over the surface.

It is known that vanadium oxide precursors, e.g. ammonium metavanadate move quickly on the surface of titania. A capillary drag is caused by differences in humidity. When no other forces are present ammonia metavanadate tends to distribute itself evenly over the surface of titania as this is the energetic minimum.

We have found that drying conditions resulting in a relatively low drying rate much reduce formation of concentration gradients in the washcoat.

Additionally, catalyst concentration gradients along micro pores in the washcoat can be reduced when drying the impregnated washcoat partly or completely by means of micro or long wave applications.

Pursuant to the above observations and findings, this invention provides a method of preparing a monolithic SCR catalyst with a plurality of gas flow channels comprising the steps of
(a) providing a monolithic shaped substrate with a plurality of parallel gas flow channels;
(b) coating the substrate with a washcoat slurry comprising titania;
(c) drying and calcining the washcoat slurry;
(d) impregnating the dried and calcined washcoat with an aqueous impregnation solution comprising a precursor of a vanadium oxide;
(e) drying the thus coated and impregnated washcoat at a drying rate of 5 mm/min or less; and
(f) activating the dried, coated and impregnated washcoat by calcining.

Specific features of the catalyst according to the invention are alone or in combination thereof that
the drying rate of the impregnated washcoat is controlled by controlling flow rate of drying air and temperature;
the drying of the impregnated washcoat is performed by means of micro wave or long wave heating;
the drying of the impregnated washcoat is performed by placing the washcoated substrate in a position horizontally relative to gravity;
the impregnation solution further comprises tungsten oxide precursor compounds;
the monolithic shaped substrate is composed of a number of corrugated sheets stacked upon each other;
each of the corrugated sheets are provided with a flat sheet prior to be stacked;
the corrugated shaped substrate is formed by rolling up a corrugated sheet;
the corrugated sheet is provided with a flat sheet prior to rolling up;
the corrugated sheet(s) comprise fiberglass;
the monolithic shaped substrate is obtained by extrusion of ceramic material;
the activated coated substrate comprises vanadium pentoxide;
activated coated substrate further comprises tungsten trioxide;
the monolithic SCR catalyst is in form of a wall flow filter;
drying air rate is 0 and the drying is performed at room temperature.

The composition of the aqueous impregnation solution comprises typically a precursor compound of vanadium pentoxide, which is the active SCR catalyst. Vanadium pentoxide is preferably promoted by the presence of tungsten trioxide. Thus the impregnation solution further contains preferably further a precursor of tungsten trioxide.

Precursors of vanadium pentoxide and tungsten trioxide commonly used are ammonium metavanadate and ammonium meta-tungstate, which after activation by calcination in air of the impregnated and dried washcoat decompose to their catalytically active oxides.

The monolithic substrate is coated with the washcoat and impregnated in accordance with commonly employed coating and impregnation methods as already mentioned hereinbefore.

The monolithic substrate can be prepared by stacking up a plurality of corrugated sheets made of ceramic or fibrous material, preferably comprising fiberglass or by rolling up a single corrugated sheet to a honeycomb monolith.

Preferably the corrugated sheet(s) is provided with a plane sheet, i.e. a liner prior to be stacked or rolled up.

Alternatively, the substrate can be prepared by extrusion of ceramic material, e.g. cordierite or silicon carbide.

In all instances, the substrate can also be in form of the known wall flow filters, like the known catalysed diesel particulate filters.

As mentioned above, the drying rate of the wet impregnated washcoat on the substrate can be controlled by the rate of drying air and the temperature blown into the flow channels after coating and.

Drying conditions include drying air flow rate inside monolith of 0-3 m/s, and a temperature of less than 70°C.

In fact the wet impregnated substrate can advantageously be dried passively at room temperature.

Drying of the washcoat can also be performed by application of micro or long waves. Thereby, low concentration gradients along micro pores in the washcoat are obtained by minimizing capillary forces. Application of micro or long waves can fully or partly replace use of drying air.

In a preferred embodiment of the invention, the washcoated and impregnated substrate is placed during the drying step in a position horizontally relative to gravity. Thereby, formation of catalyst concentration gradients is even more reduced, in particular in the bottom part of the flow channels. The bottom part shall be understood as the part facing the part of the flow channels where excess of the impregnation solution is withdrawn.

### Examples

### Example 1

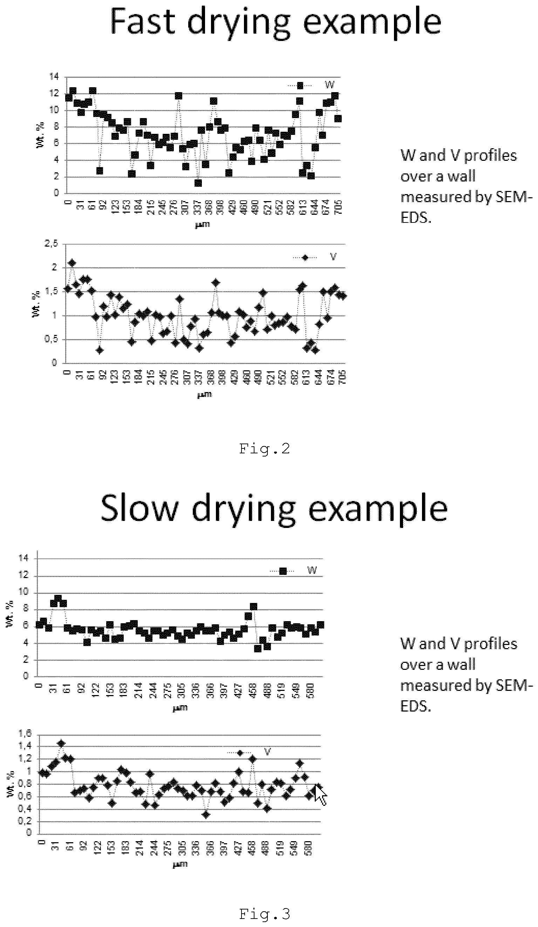

A honeycomb structured substrate was washcoated with a titania slurry to a wash coat layer thickness of 0.3 to 0.5 mm. The washcoated substrate was dried and calcined at 550°C. The dried and calcined substrate was subsequently impregnated with an aqueous impregnation solution containing 1.95 wt% ammonium meta-vanadate and 9.66 wt% ammonium meta-tungstate. The impregnated substrate was then dried with warm air at 50°C and an air flow rate of 2m/sec resulting in a drying rate of 0.8-1.2 mm/min. After drying the impregnated substrate was calcined at 450°C for 2 hours. The distribution profile of vanadium and tungsten over wall thickness in the calcined substrate is shown in Fig.3. As seen in Fig.3, the slow dried substrate has almost no concentration gradients in the distribution of tungsten across the thickness of the washcoat, and the concentration gradient of vanadium is very much reduced compared to the gradients in the fast dried substrate prepared in the following comparison example (see Fig.2)

### Comparison Example

A washcoated and impregnated honeycomb structured substrate was prepared as in Example 1. The impregnated substrate was dried with warm air at 250°C and an air flow rate of2m/sec resulting in a drying rate of 6-8 mm/min and calcined at 450°C for 2 hours.

### Example 2

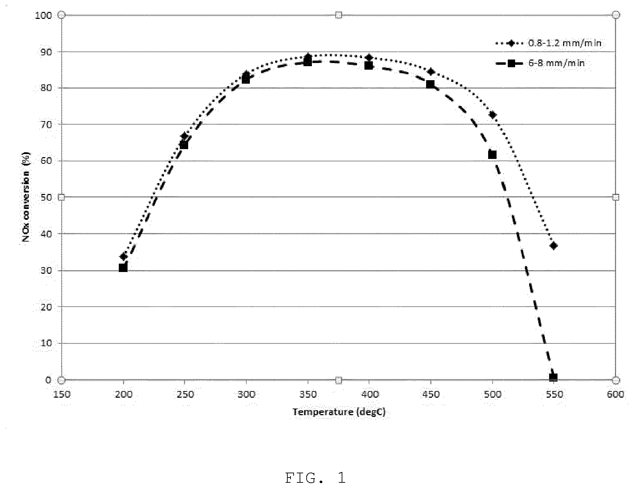

The SCR activity of the honeycomb catalysts prepared in Example 1 and in the Comparison Example was tested at temperatures between 200 and 550°C at a NO/NH₃ molar ratio of 1.2. The test results are shown in Fig.1. As apparent from Fig.1, the honeycomb catalyst dried at a rate of 0.8-1.2 mm/min has an improved SCR activity at temperatures above 350°C compared to the catalyst dried at a higher drying rate of 6-8 mm/min.

## Claims

1. Method of preparing a monolithic SCR catalyst with a plurality of gas flow channels comprising the steps of
(a) providing a monolithic shaped substrate with a plurality of parallel gas flow channels;
(b) coating the substrate with a washcoat slurry comprising titania;
(c) drying and calcining the washcoated substrate;
(d) impregnating the dried and calcined washcoated substrate with an aqueous impregnation solution comprising a precursor of a vanadium oxide;
(e) drying the thus coated and impregnated washcoated substrate at a drying rate of 5 mm/min or less; and
(f) activating the dried washcoated and impregnated substrate by calcining.

2. The method of claim 1, wherein the drying rate is controlled by controlling a drying air flow rate to 0-3m/s and a drying air temperature of below 70°C.

3. The method of claim 1, wherein the drying of the washcoated and impregnated substrate is performed by means of micro wave or long wave heating.

4. The method of any one of claims 1 to 3, wherein the drying of the washcoated and impregnated substrate is performed by placing the substrate in a position horizontally relative to gravity.

5. The method of any one of claims 1 to 4, wherein the aqueous impregnation solution further comprises a precursor compound a tungsten oxide.

6. The method of any one of claims 1 to 5, wherein the monolithic shaped substrate is composed of a number of corrugated sheets stacked upon each other.

7. The method of claim 6, wherein each of the corrugated sheets are provided with a flat sheet prior to be stacked.

8. The method of any one of claims 1 to 5, wherein the corrugated shaped substrate is formed by rolling up a single corrugated sheet.

9. The method of claim 8, wherein the single corrugated sheet is provided with a flat sheet prior to rolling up.

10. The method of any one of claims 6 to 9, wherein the corrugated sheet(s) comprise(s) fiberglass.

11. The method of any one of claims 1 to 5, wherein the monolithic shaped substrate is obtained by extrusion of ceramic material.

12. The method of any one of claims 1 to 11, wherein the activated substrate of step (d) comprises vanadium pentoxide.

13. The method of claim 12, wherein the activated substrate further comprises tungsten trioxide.

14. The method of any one of claims 1 to 13, wherein the monolithic SCR catalyst is in form of a wall flow filter.

15. The method of any one of claims 2 to 14, wherein the drying air rate is 0 m/s and the drying is performed at room temperature.

## Patentansprüche

1. Verfahren zur Herstellung eines monolithischen SCR-Katalysators mit einer Vielzahl von Gasströmungskanälen, umfassend die Schritte
(a) Bereitstellen eines monolithisch geformten Substrats mit einer Vielzahl von parallelen Gasströmungskanälen;
(b) Beschichten des Substrats mit einem Washcoat-Schlicker, der Titandioxid umfasst;
(c) Trocknen und Kalzinieren des mit einem Washcoat beschichteten Substrats;
(d) Imprägnieren des getrockneten und kalzinierten mit einem Washcoat beschichteten Substrats mit einer wässrigen Imprägnierlösung, die einen Vorläufer eines Vanadiumoxids umfasst;
(e) Trocknen des so beschichteten und imprägnierten mit einem Washcoat beschichteten Substrats bei einer Trocknungsgeschwindigkeit von 5 mm/min oder weniger; und
(f) Aktivieren des getrockneten, mit einem Washcoat beschichteten und imprägnierten Substrats durch Kalzinieren.

2. Verfahren nach Anspruch 1, wobei die Trocknungsgeschwindigkeit geregelt wird, indem eine Strömungsgeschwindigkeit der Trocknungsluft auf 0-3 m/s und eine Temperatur der Trocknungsluft auf unter 70 °C geregelt wird.

3. Verfahren nach Anspruch 1, wobei das Trocknen des mit einem Washcoat beschichteten und imprägnierten Substrats durch Erhitzen mittels Mikrowellen oder Langwellen durchgeführt wird.

4. Verfahren nach einem der Ansprüche 1 bis 3, wobei das Trocknen des mit einem Washcoat beschichteten und imprägnierten Substrats durchgeführt wird, indem das Substrat in eine horizontale Position relativ zur Schwerkraft gebracht wird.

5. Verfahren nach einem der Ansprüche 1 bis 4, wobei die wässrige Imprägnierlösung ferner eine Vorläuferverbindung von Wolframoxid umfasst.

6. Verfahren nach einem der Ansprüche 1 bis 5, wobei das monolithisch geformte Substrat aus einer Anzahl aufeinander gestapelter gewellter Lagen zusammengesetzt ist.

7. Verfahren nach Anspruch 6, wobei jede der gewellten Lagen vor dem Stapeln mit einer flachen Lage versehen wird.

8. Verfahren nach einem der Ansprüche 1 bis 5, wobei das gewellt geformte Substrat durch Aufrollen einer einzelnen gewellten Lage gebildet wird.

9. Verfahren nach Anspruch 8, wobei die einzelne gewellte Lage vor dem Aufrollen mit einer flachen Lage versehen wird.

10. Verfahren nach einem der Ansprüche 6 bis 9, wobei die gewellte Lage bzw. die gewellten Lagen Glasfasern umfasst bzw. umfassen.

11. Verfahren nach einem der Ansprüche 1 bis 5, wobei das monolithisch geformte Substrat durch Extrusion von Keramikmaterial erhalten wird.

12. Verfahren nach einem der Ansprüche 1 bis 11, wobei das aktivierte Substrat von Schritt (d) Vanadiumpentoxid umfasst.

13. Verfahren nach Anspruch 12, wobei das aktivierte Substrat ferner Wolframtrioxid umfasst.

14. Verfahren nach einem der Ansprüche 1 bis 13, wobei der monolithische SCR-Katalysator in Form eines Wandstromfilters vorliegt.

15. Verfahren nach einem der Ansprüche 2 bis 14, wobei die Trocknungsluftgeschwindigkeit 0 m/s beträgt und die Trocknung bei Raumtemperatur durchgeführt wird.

## Revendications

1. Procédé de préparation d'un catalyseur SCR monolithique avec une pluralité de canaux d'écoulement de gaz comprenant les étapes consistant à
(a) fournir à un substrat profilé monolithique une pluralité de canaux parallèles d'écoulement de gaz ;
(b) revêtir le substrat avec une bouillie de couche d'imprégnation comprenant du dioxyde de titane ;
(c) sécher et calciner le substrat enduit d'une couche d'imprégnation ;
(d) imprégner le substrat enduit d'une couche d'imprégnation séché et calciné avec une solution aqueuse d'imprégnation comprenant un précurseur d'un oxyde de vanadium ;
(e) sécher le substrat enduit d'une couche d'imprégnation ainsi revêtu et imprégné à une vitesse de séchage de 5 mm/min ou moins ; et
(f) activer par calcination le substrat séché enduit d'une couche d'imprégnation et imprégné.

2. Procédé selon la revendication 1, dans lequel la vitesse de séchage est commandée en commandant le débit d'air de séchage à 0 à 3 m/s et une température d'air de séchage inférieure à 70 °C.

3. Procédé selon la revendication 1, dans lequel le séchage du substrat enduit d'une couche d'imprégnation et imprégné est mis en œuvre au moyen d'un chauffage à micro-ondes ou ondes longues.

4. Procédé selon l'une quelconque des revendications 1 à 3, dans lequel le séchage du substrat enduit d'une couche d'imprégnation et imprégné est mis en œuvre en plaçant le substrat dans une position horizontale par rapport à la pesanteur.

5. Procédé selon l'une quelconque des revendications 1 à 4, dans lequel la solution aqueuse d'imprégnation comprend en outre un composé précurseur d'un oxyde de tungstène.

6. Procédé selon l'une quelconque des revendications 1 à 5, dans lequel le substrat profilé monolithique est composé d'un nombre de feuilles ondulées empilées les unes au-dessus des autres.

7. Procédé selon la revendication 6, dans lequel chacune des feuilles ondulées est pourvue d'une feuille plate avant d'être empilée.

8. Procédé selon l'une quelconque des revendications 1 à 5, dans lequel le substrat de forme ondulée est formé par enroulement d'une unique feuille ondulée.

9. Procédé selon la revendication 8, dans lequel l'unique feuille ondulée est pourvue d'une feuille plate avant enroulement.

10. Procédé selon l'une quelconque des revendications 6 à 9, dans lequel la/les feuille(s) ondulée(s) comprend/comprennent de la fibre de verre.

11. Procédé selon l'une quelconque des revendications 1 à 5, dans lequel le substrat profilé monolithique est obtenu par extrusion de matériau céramique.

12. Procédé selon l'une quelconque des revendications 1 à 11, dans lequel le substrat activé de l'étape (d) comprend du pentoxyde de vanadium.

13. Procédé selon la revendication 12, dans lequel le substrat activé comprend en outre du trioxyde de tungstène.

14. Procédé selon l'une quelconque des revendications 1 à 13, dans lequel le catalyseur SCR monolithique est sous forme d'un filtre à parois filtrantes.

15. Procédé selon l'une quelconque des revendications 2 à 14, dans lequel la vitesse d'air de séchage est de 0 m/s et le séchage est mis en œuvre à température ambiante.
